# EUROPÄISCHE PATENTSCHRIFT

(11) **EP 1 214 750 B1**
(45) Veröffentlichungstag und Bekanntmachung des Hinweises auf die Patenterteilung: **02.04.2003**
(21) Anmeldenummer: 00967550.5
(22) Anmeldetag: 11.09.2000
(51) Int. Cl.: H01M 8/04

(54) **BESTIMMUNG DER ALKOHOLKONZENTRATION IM ELEKTROLYT VON BRENNSTOFFZELLEN**
DETERMINATION OF ALCOHOL CONCENTRATION IN AN ELECTROLYTE OF FUEL CELLS
DETERMINATION DE LA CONCENTRATION D'ALCOOL DANS L'ELECTROLYTE DE PILES A COMBUSTIBLE

(30) Priorität: 24.09.1999 DE 19945929
(43) Veröffentlichungstag der Anmeldung: 19.06.2002
(73) Patentinhaber: SIEMENS AKTIENGESELLSCHAFT, 80333 München (DE)
(72) Erfinder: PREIDEL, Walter, 91058 Erlangen (DE)
(86) Internationale Anmeldenummer: DE0003145
(87) Internationale Veröffentlichungsnummer: WO01023876

(56) Entgegenhaltungen:
- EP-A- 0 411 204
- WO-A-98/45694
- DE-A- 2 114 919
- US-A- 3 425 873
- US-A- 4 810 597
- US-A- 5 945 231

## Beschreibung

Die Erfindung betrifft ein Verfahren zur Bestimmung der Alkoholkonzentration im Alkohol/Wasser-Gemisch von mit diesem Gemisch betriebenen Brennstoffzellen, insbesondere Direkt-Methanol-Brennstoffzellen, wobei die Messgröße volumenabhängig ist. Ferner betrifft die Erfindung eine Vorrichtung zur Durchführung dieses Verfahrens.

Zur Einhaltung der optimalen Betriebsparameter bei Brennstoffzellen, die mit flüssigen Brennstoffen betrieben werden, ist es erforderlich, die Brennstoffkonzentration zu regeln. Hierzu muss die aktuelle Konzentration bestimmt werden.

Aus der EP 0 684 469 A1 ist ein Messgerät zur Konzentrationsbestimmung niedermolekularer Alkohole, wie Methanol, in Wasser oder Säuren bekannt. Dieses Messgerät weist eine poröse Anode zur elektrochemischen Oxidation von Alkohol, eine Kathode zur elektrochemischen Reduktion von Sauerstoff, eine zwischen Anode und Kathode angeordnete ionenleitende Membran und eine diffusionsbegrenzende Membran auf, die auf der von der ionenleitenden Membran abgewandten Seite der Anode angeordnet ist. Das Messgerät, das quasi eine Brennstoffzelle darstellt, wird beispielsweise in der Brennstoffleitung angeordnet und potentiostatisch auf einer definierten Zellspannung gehalten. Je nach der Alkoholkonzentration fließt durch diese Brennstoffzelle ein Strom, aus dessen Größe - mittels einer Eichkurve - auf die Konzentration geschlossen werden kann. Eine derartige Vorgehensweise ist relativ aufwendig, da Strom und Spannung gemessen bzw. kontrolliert werden müssen.

Bei sogenannten Direkt-Methanol-Brennstoffzellen (DMFC = Direct Methanol Fuel Cell) wird der Brennstoff Methanol direkt elektrochemisch oxidiert, d.h. ohne den Zwischenschritt einer Reformierung umgesetzt (siehe dazu beispielsweise M. Waidhas in K. Ledjeff (Hrsg.) "Brennstoffzellen: Entwicklung, Technologie, Anwendung", C.F. Müller Verlag GmbH, Heidelberg 1995, Seiten 137 bis 156). Um bei einer DMFC den optimalen Arbeitspunkt zu erreichen, ist es notwendig, mit verdünntem Brennstoff im Überschuss zu arbeiten. Wegen des Überschussbetriebs ist es - zur Vermeidung größerer Abfallmengen - unerlässlich, den Brennstoff zu zirkulieren und durch Zudosierung von konzentriertem Brennstoff die erforderliche Konzentration einzustellen. Zu diesem Zweck muss dann die jeweils aktuelle Brennstoffkonzentration gemessen werden.

Beim Betrieb von Direkt-Methanol-Brennstoffzellen beispielsweise entsteht in der Arbeitsschicht der Anode - durch Oxidation des Methanols - Kohlendioxid in Form von Gasblasen. Bei der Messung der Methanolkonzentration im Anodenkreislauf können diese Gasblasen die Messung beeinträchtigen, wenn eine Messgröße verwendet wird, die vom Volumen der zu messenden Substanz abhängig ist. Dies ist beispielsweise bei der Messung der kernmagnetischen Resonanz der Fall.

Mit der nichtvorveröffentlichten DE 199 38 790 A1 wurde auch bereits vorgeschlagen, als Messgröße die Kapazität eines Kondensators mit dem Brennstoff/Elektrolyt-Gemisch, beispielsweise einem Alkohol/Wasser-Gemisch, als Dielektrikum zu messen, daraus die Dielektrizitätskonstante des Gemisches zu ermitteln und dann die Brennstoffkonzentration zu bestimmen. Sobald in der Messzelle bzw. Messanordnung Gasblasen entstehen oder hindurchtransportiert werden, wird der Messeffekt im Verhältnis von Flüssigkeitsraum zu Gasraum verändert. Da die Anodenflüssigkeit nahezu mit Kohlendioxid gesättigt ist, entstehen auch an den Oberflächen sehr leicht Gasbläschen, die das Messsignal verfälschen können. Dieses Problem kann auch nicht durch einen Blasenfänger vor der Messzelle gelöst werden.

Weiterhin ist aus der EP 0 411 204 A1 ein Verfahren zur Feststellung des Alkoholgehaltes und/oder des Heizwertes von Kraftstoffen bekannt, bei dem durch Messung elektrisch messbarer Größen in einer den Kraftstoff enthaltenen Messzelle insbesondere die Dielektrizitätsmaßzahl als Kenngröße des Alkoholgehaltes bzw. des Heizwertes ausgewertet wird. Dazu dient ein Messkondensator, bei dem die Feststellung der Kapazität schaltungstechnisch und/oder rechnerisch unabhängig vom Einfluss der Leitfähigkeit des Kraftstoffes erfolgt. Eine Volumenabhängigkeit der Messgröße oder die Gefahr des Entstehens von Gasblasen ist bei der Messung an Kraftstoff nicht gegeben.

Aufgabe der Erfindung ist es demgegenüber, das Verfahren der eingangs genannten Art zur Bestimmung der Alkoholkonzentration im Alkohol/Wasser-Gemisch von mit diesem Gemisch betriebenen Brennstoffzellen in der Weise auszugestalten, dass keine Störungen durch Gasblasen auftreten.

Die Aufgabe ist erfindungsgemäß bei einem Verfahren der eingangs genannten Art durch die Maßnahmen des Patentanspruches 1 gelöst. Eine zugehörige Vorrichtung ist im Patentanspruch 4 angegeben. Weiterbildungen des Verfahrens bzw. der zugehörigen Vorrichtung sind Gegenstand der abhängigen Ansprüche.

Beim erfindungsgemäßen Verfahren wird durch Erhöhung des Druckes auf das Alkohol/Wasser-Gemisch erreicht, das speziell Kohlendioxid, das beim Betrieb der Brennstoffzellen gebildet wird, im Gemisch gelöst wird. Somit kann die volumenabhängige Messgröße beim im Alkohol/Wasser-Gemisch gelösten Kohlendioxid ermittelt und daraus ein korrekter Konzentrationswert des Alkohols bestimmt werden. Der Alkohol ist bei diesem Messverfahren insbesondere Methanol, Ethanol, Propanol oder Glykol.

Die Erfindung löst also das mit Gasblasen bzw. mit der Entstehung von Gasblasen verbundene Problem für Brennstoffzellen mit Anode und Kathode durch Erhöhung des Druckes auf die Anodenflüssigkeit. Wird nämlich die Anodenflüssigkeit gegen einen Überdruck transportiert, dann löst sich - bei einem ausreichend hohen Druckunterschied - das beim Betrieb der Brennstoffzellen durch Oxidation des Alkohols gebildete Kohlendioxid in der Flüssigkeit und an der Oberfläche entstehen keine Gasblasen.

Vorzugsweise beträgt die Druckerhöhung 0,5 bis 1,5·10⁵ Pa (0,5 bis 1,5 bar). Bereits bei einer Druckerhöhung in diesem Bereich werden keine Gasblasen mehr beobachtet, außerdem erfolgt keine Blasenbildung. Die Messungen zur Bestimmung der Alkoholkonzentration sind deshalb störungsfrei möglich.

Beim Verfahren nach der Erfindung kann als Messgröße vorteilhaft die Dielektrizitätskonstante des Alkohol/Wasser-Gemisches bestimmt werden. Hierbei wird in einer Messzelle, durch welche das Alkohol/Wasser-Gemisch hindurchströmt, die Kapazität kontinuierlich gemessen. Die Kapazitätsmessung erfolgt im allgemeinen im Frequenzbereich zwischen 1 kHz und 100 MHz, vorzugsweise zwischen 100 kHz und 10 MHz. Falls erforderlich, wird die Temperaturabhängigkeit der Kapazität durch eine Temperaturmessung korrigiert. Die gemessene Kapazität ist ein direktes Maß für die Dielektrizitätskonstante und damit für die Konzentration des Alkohols. Die Dielektrizitätskonstante des Gemisches variiert nämlich monoton mit dem Mischungsverhältnis der Bestandteile des Gemisches.

Eine Vorrichtung zur Durchführung des Verfahrens nach der Erfindung weist eine Messzelle bzw. Messanordnung auf, die in einer Leitung für das Alkohol/Wasser-Gemisch angeordnet ist. Vor der Messzelle ist in dieser Leitung, die insbesondere die Förderleitung für das Alkohol/Wasser-Gemisch ist, eine Pumpe zur Flüssigkeitsförderung angeordnet. Nach der Messzelle befindet sich in dieser Leitung ein Überdruckventil. Die Anordnung von Förderpumpe und Überdruckventil dient dabei zur Einstellung der Druckerhöhung.

Vorteilhaft kann in der Förderleitung vor der Pumpe zusätzlich ein Blasenfänger ("bubble catcher") angeordnet sein. Dadurch können dann Gasblasen entfernt werden, wenn die Gasmenge in der Flüssigkeit zu hoch ist bzw. wenn das Gas - aufgrund erhöhter Temperatur - nicht mehr vollständig in der Flüssigkeit löslich ist.

Die Bestimmung der Alkoholkonzentration muss nicht unmittelbar in der Förderleitung für das Alkohol/Wasser-Gemisch durchgeführt werden, vielmehr kann dies auch in einem Bypass zur Förderleitung erfolgen, d.h. in einer Umführungsleitung. Dazu sind dann die Messzelle, die Förderpumpe und das Überdruckventil im Bypass angeordnet. In diesem Fall kann auch das Auftreten einer zu hohen Anzahl an Blasen durch eine geeignete Anordnung des Ansaugrohres im Vorratsbehälter der Anodenflüssigkeit, d.h. des Alkohol/Wasser-Gemisches, verhindert werden.

## Patentansprüche

1. Verfahren zur Bestimmung der Alkoholkonzentration im Alkohol/Wasser-Gemisch von mit diesem Gemisch betriebenen Brennstoffzellen, insbesondere Direkt-Methanol-Brennstoffzeilen, durch Messung einer im Alkohol/Wasser-Gemisch volumenabhängigen Messgröße, **dadurch gekennzeichnet, dass** durch eine Erhöhung des Druckes auf das Alkohol/Wasser-Gemisch beim Betrieb der Brennstoffzellen gebildetes Kohlendioxid im Gemisch gelöst wird und dass die volumenabhängige Messgröße bei im Alkohol/Wasser-Gemisch gelöstem Kohlendioxid ermittelt und daraus die Alkoholkonzentration bestimmt wird.

2. Verfahren nach Anspruch 1, **dadurch gekennzeichnet, dass** die Druckerhöhung 0,5 bis 1,5·10⁵ Pa beträgt.

3. Verfahren nach Anspruch 1 oder 2, **dadurch gekennzeichnet, dass** als Messgröße die Dielektrizitätskonstante des Gemisches bestimmt wird.

4. Vorrichtung zur Durchführung des Verfahrens nach einem der Ansprüche 1 bis 3, **gekennzeichnet durch** eine in einer Leitung für das Alkohol/Wasser-Gemisch angeordnete Messzelle, eine vor der Messzelle angeordnete Förderpumpe für das Gemisch und ein nach der Messzelle angeordnetes Überdruckventil, wobei die Anordnung von Förderpumpe und Überdruckventil zur Einstellung einer definierten Druckerhöhung in der Messzelle dient.

5. Vorrichtung nach Anspruch 4, **dadurch gekennzeichnet, dass** vor der Förderpumpe ein Blasenfänger angeordnet ist.

6. Vorrichtung nach Anspruch 4 oder 5, **dadurch gekennzeichnet, dass** Messzelle, Förderpumpe und Überdruckventil in einem Bypass zur Leitung für das Alkohol/Wasser-Gemisch angeordnet sind.

## Claims

1. Method for determining the alcohol concentration in the alcohol/water mixture of fuel cells which are operated with this mixture, in particular direct methanol fuel cells, by measuring a measured variable which is volume-dependent in the alcohol/water mixture, **characterized in that**, as a result of the pressure acting on the alcohol/water mixture being increased, carbon dioxide which is formed during operation of the fuel cells is dissolved in the mixture and **in that** the volume-dependent measured variable is determined with carbon dioxide dissolved in the alcohol/water mixture, and the alcohol concentration is determined therefrom.

2. Method according to Claim 1, **characterized in that** the increase in pressure amounts to 0.5 to 1.5·10⁵ Pa.

3. Method according to Claim 1 or 2, **characterized in that** the dielectric constant of the mixture is determined as the measured variable.

4. Apparatus for carrying out the method according to one of Claims 1 to 3, **characterized by** a measurement cell which is arranged in a line for the alcohol/water mixture, a delivery pump for the mixture which is arranged upstream of the measurement cell, and a pressure relief valve which is arranged downstream of the measurement cell, the arrangement of delivery pump and pressure relief valve being used to set a defined increase in pressure in the measurement cell.

5. Apparatus according to Claim 4, **characterized in that** a bubble catcher is arranged upstream of the delivery pump.

6. Apparatus according to Claim 4 or 5, **characterized in that** measurement cell, delivery pump and pressure relief valve are arranged in a bypass to the line for the alcohol/water mixture.

## Revendications

1. Procédé de détermination de la concentration d'alcool dans le mélange alcool/eau de piles à combustible alimentées en ce mélange, notamment de piles à combustible directes au méthanol, par mesure d'une grandeur de mesure qui dépend du volume dans le mélange alcool/eau, **caractérisé en ce qu'**en élevant la pression sur le mélange alcool/eau on dissout dans le mélange du dioxyde de carbone formé en fonctionnement des piles à combustible et on détermine la grandeur de mesure qui dépend du volume pour du dioxyde de carbone dissous dan le mélange alcool/eau et on en déduit la concentration d'alcool.

2. Procédé suivant la revendication 1, **caractérisé en ce que** l'élévation de pression est comprise entre 0,5 et 1,5· 10⁵ Pa.

3. Procédé suivant la revendication 1 ou 2, **caractérisé en ce que** l'on prend comme grandeur de mesure la constante diélectrique du mélange.

4. Dispositif de mise en oeuvre du procédé suivant l'une des revendications 1 à 3, **caractérisé par** une cellule de mesure montée dans un conduit pour le mélange alcool/eau, une pompe d'alimentation pour le liquide qui est montée en amont de la cellule de mesure et une vanne de surpression qui est montée en aval de la cellule de mesure, l'agencement de la pompe d'alimentation et de la vanne de surpression servant à établir une élévation de pression définie dans la cellule de mesure.

5. Dispositif suivant la revendication 4, **caractérisé en ce qu'**un capteur de bulles est monté en amont de la pompe d'alimentation.

6. Dispositif suivant la revendication 4 ou 5, **caractérisé en ce que** la cellule de mesure, la pompe d'alimentation et la vanne de surpression sont montées dans une dérivation au conduit pour le mélange alcool/eau.
